Europäisches Patentamt

European Patent Office

Office européen des brevets

(19)

(11) Publication number: **0 453 050 A2**

# (12) EUROPEAN PATENT APPLICATION

(21) Application number: **91201541.9**

(22) Date of filing: **26.09.90**

(51) Int. Cl.⁵: **G06K 19/04**

This application was filed on 18.06.1991 as a divisional application to the application mentioned under INID code 60.

(30) Priority: **29.09.89 GB 8922041**

(43) Date of publication of application:
**23.10.91 Bulletin 91/43**

(84) Designated Contracting States:
**AT BE CH DE DK ES FR GB GR IT LI LU NL SE**

(60) Publication number of the earlier application in accordance with Art. 76 EPC: **0423955**

(71) Applicant: **AMPY AUTOMATION - DIGILOG LTD**
**Frognall**
**Deeping St James Peterborough PE6 8RS (GB)**

(72) Inventor: **Payne, Anthony Kenneth Leslie**
**The Willows, Spalding Road, Frognall**
**Deeping St. James, Peterborough PE6 8SA**
**(GB)**

(74) Representative: **Nash, Keith Wilfrid et al**
**KEITH W. NASH & Co. Pearl Assurance House**
**90-92 Regent Street**
**Cambridge CB2 1DP (GB)**

(54) **Machine readable card.**

(57)    A machine readable card has a distinctive shaping at one corner which enables the corner to be identified by touch. In conjunction with the rectangular shape of the card the shaping enables the orientation of the card to be determined wholly by feel.

The shaping takes the form of a sharp right-angled corner where the other three corners are rounded.

EP 0 453 050 A2

Jouve, 18, rue Saint-Denis, 75001 PARIS

## Field of the invention

This invention relates generally to machine readable cards, more especially but not exclusively machine readable cards bearing a magnetic stripe, such as cheque guarantee cards, credit cards, cash cards, prepayment cards such as electricity cards, and analogous machine readable cards. Such cards are generally rectangular in shape.

## Background to the invention

Machine readable cards are nowadays in widespread use. However, the actual reading of the card generally requires that the card be inserted into the machine in a particular orientation, i.e. with one particular side facing upwards and with one particular end of the card as the leading end. This can present a problem to blind people, and even to sighted people if the card is to be used in the dark. Especially in the case of an electricity prepayment card, for example, it will often be the case that the card has to be inserted into the meter in the dark.

UK Patent Specification 1090362 illustrates a card in which one corner is cut at an angle and the other three corners are rounded. The angle-cut corner is very difficult to distinguish by feel alone from the rounded corners.

UK Patent Specification 1131,436 shows a punched card which likewise has a similar configuration at one corner. The card is not a magnetic stripe card and its application (to record arrival and departure times at a workplace) does not require the user to have to use the card in the dark. The angle-cut corner is therefore more for visual identification purposes.

## The invention

According to the invention, there is provided a generally rectangular machine readable card having a magnetic stripe on one surface and having a distinctive shaping at or adjacent one corner which enables the corner to be identified by touch, whereby in conjunction with the generally rectangular shape of the card its orientation is determinable wholly by feel, wherein the corner to be identified is in the form of a sharp right-angle and the other three corners are rounded.

## Description of embodiment

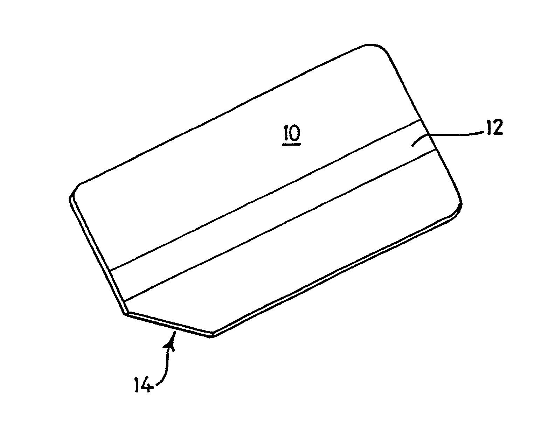

The invention is exemplified with reference to the accompanying drawings, the single Figure of which shows a machine readable card to which the invention can be applied.

In the drawing there is shown a generally rectangular machine readable card 10 having a magnetic stripe 12, such as an electricity prepayment card. In the drawing one corner is cut away, as indicated at 14. The corner 14 is thereby identifiable by touch, whereby in conjunction with the generally rectangular shape of the card, its orientation can be wholly deduced solely by feel, whereby it is known to the user, without being able to see the card, which way up the card has to be held for insertion into the meter or other machine and which end must be inserted first.

Although not shown, the invention lies in forming the corner 14 as a sharp right angled corner, leaving the other three corners rounded as shown in the drawing. The sharp corner so defined is preferred since the general layout and design of the card is unaffected but the sharp corner is readily identified by touch.

## Claims

1. A generally rectangular machine readable card having a magnetic stripe on one surface and having a distinctive shaping at or adjacent one corner which enables the corner to be identified by touch, whereby in conjunction with the generally rectangular shape of the card its orientation is determinable wholly by feel, wherein the corner to be identified is in the form of a sharp right-angle and the other three corners are rounded.